# EUROPÄISCHE PATENTSCHRIFT

(11) **EP 3 210 893 B1**
(45) Veröffentlichungstag und Bekanntmachung des Hinweises auf die Patenterteilung: **11.07.2018**
(21) Anmeldenummer: 17020065.3
(22) Anmeldetag: 23.02.2017
(51) Int. Cl.: B64F 1/32, B60P 1/00

(54) **VERSORGUNGSFAHRZEUG, INSBESONDERE VERSORGUNGSFAHRZEUG ZUM BE- UND/ODER ENTLADEN VON FLUGZEUGEN**
SUPPLY VEHICLE, IN PARTICULAR SUPPLY VEHICLE FOR LOADING AND/OR UNLOADING AIRCRAFT
VÉHICULE DE RAVITAILLEMENT, EN PARTICULIER VÉHICULE DE RAVITAILLEMENT DESTINÉ À CHARGER ET/OU DÉCHARGER DES AÉRONEFS

(30) Priorität: 23.02.2016 DE 102016002073; 23.02.2016 DE 202016001150 U
(43) Veröffentlichungstag der Anmeldung: 30.08.2017
(73) Patentinhaber: KAMAG Transporttechnik GmbH & Co. KG, 89079 Ulm (DE)
(72) Erfinder: Haupt, Jürgen, 89079 Ulm (DE)
(74) Vertreter: Leitner, Waldemar

(56) Entgegenhaltungen:
- EP-A2- 1 193 175
- DE-A1- 3 523 496
- DE-B- 1 260 995
- DE-U1- 8 619 081
- US-A1- 2012 193 480

## Beschreibung

Die Erfindung betrifft ein Versorgungsfahrzeug, insbesondere ein Versorgungsfahrzeug zum Be- und/oder Entladen von Flugzeugen, welches ein Fahrwerk mit einem Fahrerhaus aufweist, wobei das Versorgungsfahrzeug eine höhenverstellbare Übergabeplattform aufweist, die über dem Fahrerhaus angeordnet und in einer ersten Übergangshöhe, die über dem Dach des Fahrerhauses liegt, anordnet ist oder in diese erste Übergangshöhe bewegbar ist. Ein derartiges Versorgungsfahrzeug ist aus der EP 1 193 175 A2 bekannt. Ein weiteres Versorgungsfahrzeug ist aus der DE 1 260 995 bekannt. Derartige Versorgungsfahrzeuge werden beispielsweise im Catering-Bereich von Fluglinien verwendet, um fertig zubereitete Lebensmittel zur Versorgung von Fluggästen und Besatzung von einer Küche zu einem Flugzeug zu transportieren. Um die Ladung dann vom Versorgungsfahrzeug in das Flugzeug umzuladen, ist es erforderlich, die in ihrer Fahrposition über dem Fahrerhaus angeordnete Übergabeplattform des Versorgungsfahrzeugs auf die Höhe einer Türöffnung des Flugzeugs anzuheben oder abzusenken. Abgesehen vom Catering-Bereich werden derartige Versorgungsfahrzeuge beispielsweise auch für den Behindertentransport, für den Sitztransport, als Serviceplattform für Flugzeuge oder als VIP-Lounge verwendet.

Bei dem bekannten Versorgungsfahrzeug ist vorgesehen, dass die Übergabeplattform direkt oberhalb des Fahrerhauses angeordnet ist und zumindest zwei Insassen nebeneinander aufnehmen kann. Sie ist mit einem Geländer sowie mit einem Anfahrschutz ausgestaltet, mittels derer die Übergabeplattform an einer Türöffnung des Flugzeugs angelegt werden kann. Das Fahrzeug weist den Weiteren einen Kofferaufbau auf, der mittels einer Hubschere anhebbar ist. An diesem Kofferaufbau sind zwei vertikale Laufschienen für die Übergabeplattform angebracht. Das Fahrerhaus ist gegenüber seiner normalen Fahrstellung seitlich verschiebbar ausgebildet. Wird dieses Fahrerhaus z. B. nach links verschoben, kann die in den vertikalen Laufschienen verschiebbare Übergangsplattform in den dadurch geschaffenen freien Raum rechts des Fahrerhauses nach unten abgesenkt werden. Zum Be- und Entladen von größeren Flugzeugen, deren Türöffnung sich auf einer Höhe oberhalb des Fahrerhausdaches des Versorgungsfahrzeugs befindet, kann der gesamte Kofferaufbau mittels der Hubschere angehoben werden. Die Übergabeplattform ist bei dem bekannten Versorgungsfahrzeug mit dem Kofferaufbau verbunden, sodass sie dabei ebenfalls angehoben wird, bis der Anfahrschutz sich auf einer Höhe mit der Türöffnung des Flugzeugs befindet. Bei kleineren Flugzeugen, bei denen sich die Türöffnung unterhalb der Höhe des Fahrerhausdaches befindet, wird dann - wie vorstehend beschrieben - das Fahrerhaus verschoben und die Übergabeplattform so lange abgesenkt, bis sie sich in einer Höhe mit der Türöffnung des Flugzeugs befindet.

Insbesondere aus Gründen der Arbeitssicherheit werden heutzutage ab gewissen Übergabehöhen Übergabeplattformen gefordert, die so breit sind, dass sich innerhalb des durch die beiden äußeren Geländer der Übergabeplattform begrenzten Raums nicht nur die Türöffnung, sondern auch die geöffnete Tür des Flugzeugs befinden. Z. B. wird von der DIN EN 12312-2/2014 für Catering-Fahrzeuge eine Übergabeplattform gefordert, die eine Breite von ca. 1,8 bis 2 Meter hat. Dies aus dem Grund, damit aus Gründen der Arbeitssicherheit sowohl die Türöffnung des Flugzeugs als auch die dazugehörige Flugzeugtür innerhalb von die Übergabeplattform seitlich begrenzenden Geländern liegt, sodass eine Absturzsicherung für den oder die auf der Übergabeplattform befindlichen Personen gegeben ist. Um nun das vorstehend beschriebene, bekannte Versorgungsfahrzeug derart auszubilden, dass die Übergabeplattform wie beschrieben abgesenkt werden könnte, wäre es folglich erforderlich, dass Fahrerhaus um mindestens diese Breite der Übergabeplattform, also um mindestens 1,8 bis 2 Meter, seitlich zu verschieben. Geht man nun von einer typischen Breite eines derartigen Versorgungsfahrzeugs von 2 bis 2,5 Meter aus, würde dies bedeuten, dass das Fahrerhaus (fast) um die vollständige Fahrzeugbreite seitlich verschoben werden müsste. Es wären dann aufwendige Abstützeinrichtungen für das derart verschobene Fahrerhaus erforderlich, um dieses abzustützen und eine hinreichende Kippstabilität des Versorgungsfahrzeugs zu erreichen. Eine derartige Lösung wäre nicht nur aufwendig und daher teuer in ihrer Realisierung. Es würde sich auch dann eine ungünstige Gesamtbreite des Versorgungsfahrzeugs mit seitlich verschobenem Fahrerhaus von - unter den vorgenannten Annahmen - ungefähr 4 Metern - ergeben. Ein derartig ausgestaltetes Versorgungsfahrzeug würde daher einen großen Parkplatz vor einem Flugzeug benötigen, der in der Regel nicht oder nur in beschränktem Maße vorhanden ist.

Die gesetzlichen Vorschriften oder entsprechende Richtlinien, wie z. B. die vorgenannte DIN, lassen aber explizit eine Ausnahme für sogenannte Einmann-Kabinen oder Einmann-Übergabeplattformen zu, auf denen beim Be- und/oder Entladevorgang nur ein einziger Bediener arbeitet. Die vorgenannte DIN EN 12 312/- 2 verlangt hierzu eine Breite der Übergabeplattform von nur 700 mm. Das Fahrerhaus ist bei derartigen Versorgungsfahrzeugen daher üblicherweise nur für einen einzigen Bediener, also in der Regel den Fahrer, ausgelegt und weist eine dementsprechend geringe Breite auf. Die Breite eines derartigen Einmann-Fahrerhauses üblicherweise höchstens die halbe Breite des Versorgungsfahrzeugs. Ein derartiges Einmann-Fahrerhaus wird daher oft in bezeichnender Art und Weise als ein "Halbschnitt" bezeichnet. Aufgrund der geringen Erstreckung eines derartigen Fahrerhauses in der Querrichtung des Versorgungsfahrzeugs ist daher seitlich neben dem Fahrerhaus Platz vorhanden, um eine höhenverstellbare, für einen einzigen Nutzer zugelassene Übergabeplattform, welche am Kofferaufbau des Versorgungsfahrzeugs höhenverstellbar geführt ist, anzuordnen. Diese Übergabeplattform kann in der Höhe von einer unteren Endposition, in der die Übergabeplattform mit dem Boden des Kofferaufbaus fluchtet, eine Position angehoben werden, in der sie sich über dem Fahrerdach befindet. Derartige mit einer Einmann-Übergabeplattform ausgerüstete Versorgungsfahrzeuge werden im Regelfall nur zum Be- und/oder Entladen von Flugzeugen mit sehr niedrigen Übergabehöhen eingesetzt.

Die meisten der heutzutage eingesetzten Flugzeuge haben eine große Übergabehöhe, sodass sie be- und entladen werden können, ohne dass die Übergabeplattform auf eine Höhe, die unter der Dachhöhe des Fahrerhauses des Versorgungsfahrzeugs liegt, abgesenkt werden muss. Flugzeuge mit einer geringeren Übergabehöhe, also mit einer Übergabehöhe, die geringer als die Dachhöhe des Fahrerhauses ist, sind somit heutzutage die Ausnahme; Sie machen ungefähr nur 10 % der zu be- und/oder entladenden Flugzeuge aus. In neun von zehn Fällen ist daher eine Absenkung der Übergabeplattform unter die Höhe des Dachs der Fahrerkabine des Versorgungsfahrzeugs nicht erforderlich. Die vorstehend beschriebene für kleinere Übergabehöhen erforderliche Ausgestaltung des bekannten Versorgungsfahrzeugs verbietet sich daher auch aus wirtschaftlichen Gründen, da sie nur in wenigen Fällen erforderlich wäre. Der vorstehend beschriebene konstruktive Aufwand, der erforderlich wäre, um das bekannte Versorgungsfahrzeug entsprechend auszubilden, rechnet sich daher in wirtschaftlicher Hinsicht nicht.

Aus der WO 2004/096642 A1 ist ein Ladefahrzeug für ein Flugzeug bekannt, welches ein Fahrwerk mit einem Fahrerhaus aufweist. Über dem vorderen Bereich des Fahrwerks, also über dem Fahrerhaus, ist eine einteilige Übergabeplattform angeordnet, welche zu einer Übergabehöhe des Flugzeugs angehoben oder abgesenkt werden kann. Seitlich neben dieser Übergabeplattform oder in Fahrzeugrichtung vor ihr liegend ist eine Ladeplattform vorgesehen, welche bis zum Boden abgesenkt und bis zur Höhe der einteiligen Übergabeplattform angehoben werden kann. Hierdurch ist es möglich, das zu verladende Gut vom Boden aufzunehmen und mittels der Ladeplattform zur Übergabeplattform zu befördern.

Aus der US 2009/0285658 A1 ist ein Fahrzeug zum Be- und Entladen eines Flugzeugs bekannt. Dieses Fahrzeug weist ein Fahrwerk und eine einteilige Übergabeplattform auf, die vor der Ladeöffnung des Flugzeugs in einer entsprechenden Übergabehöhe positioniert werden kann. Zum Transport des Ladeguts wird eine vor der Übergabeplattform angeordnete Ladeplattform verwendet.

Es ist daher Aufgabe der vorliegenden Erfindung, ein Versorgungsfahrzeug der eingangs genannten Art derart weiterzubilden, dass in einfacher Art und Weise ein Be- und/oder Entladen, insbesondere eines Flugzeugs, in einer ersten Übergabehöhe, die über dem Dach des Fahrerhauses des Versorgungsfahrzeugs liegt, und in einer zweiten Übergabehöhe, die unterhalb des Dachs des Fahrerhauses liegt, ermöglicht ist.

Zur Lösung dieser Aufgabe schlägt die Erfindung vor, dass die Übergabeplattform in ihrer Breite geteilt ausgeführt ist und einen ersten Plattformteil und zumindest einen über dem Fahrerhaus angeordneten zweiten Plattformteil aufweist, und dass der erste Plattformteil unabhängig vom zweiten Plattformteil der Übergabeplattform seitlich des Fahrerhauses in eine zweite Übergabehöhe, die geringer als die Höhe des Fahrerhauses ist, absenkbar und anhebbar ist.

Durch die erfindungsgemäßen Maßnahmen wird in vorteilhafter Art und Weise ein Versorgungsfahrzeug, insbesondere ein Versorgungsfahrzeug zum Be- und/oder Entladen von Flugzeugen, insbesondere für den Catering-Bereich, ausgebildet, welches sich dadurch auszeichnet, dass das Be- und/oder Entladen bei einer ersten Übergangshöhe der Übergabeplattform für diesen Vorgang eine breite Übergabeplattform zur Verfügung steht, und dass der erste Plattformteil der Übergabeplattform auf eine zweite Übergabehöhe, die geringer als die Höhe der Übergabeplattform in ihrer Fahrposition ist, abgesenkt werden kann. Die erfindungsgemäßen Maßnahmen erlauben daher in einfacher Art und Weise sowohl das Beladen von großen als auch von kleinen Flugzeugen mit ein und demselben Versorgungsfahrzeug.

Eine vorteilhafte Weiterbildung der Erfindung sieht vor, dass das Fahrerhaus des erfindungsgemäßen Versorgungsfahrzeugs zumindest in einer Richtung derart weit quer zur Fahrtrichtung des Versorgungsfahrzeugs versetzbar ist, sodass das erste Plattformteil die Übergabeplattform seitlich des derart versetzten Fahrerhauses absenkbar und anhebbar ist. Durch die erfindungsgemäßen Maßnahmen wird in vorteilhafter Art und Weise ein Versorgungsfahrzeug ausgebildet, bei dem sich die Übergabeplattform in ihrer Fahrposition über dem Fahrerhaus befindet. In vorteilhafter Art und Weise kann daher das Fahrerhaus so breit ausgebildet sein, dass in ihm zwei oder mehr Personen Platz nehmen können. Beim Beladen oder Entladen eines Flugzeugs bei der größeren ersten Übergabehöhe steht dann die gesamte, durch das erste Plattformteil und das zweite Plattformteil gegebene Breite der Übergabeplattform zur Verfügung. In der geringeren zweiten Übergabehöhe kann dann der Be- und/oder Entladevorgang mittels des unter die Höhe des Dachs des Fahrerhauses abgesenkten ersten Plattformteils der Übergabeplattform durchgeführt werden,

Eine weitere vorteilhafte Erfindung sieht vor, dass das Fahrerhaus feststehend, also nicht versetzbar oder zumindest nicht um die Breite des zweiten Plattformteils versetzbar auf dem Fahrwerk angeordnet ist. In der Fahrposition befindet sich das zweite Plattformteil der Übergabeplattform über dem Fahrerhaus, das erste Plattformteil ist vorzugsweise abgesenkt und befindet sich in seiner unteren Stellung neben dem vorgenannten Fahrerhaus. Eine derartige Ausgestaltung des erfindungsgemäßen Versorgungsfahrzeugs wird dann bevorzugt, wenn für den Betrieb des Versorgungsfahrzeugs ein Einmann-Fahrerhaus ausreichend ist.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, welche im Folgenden anhand der Figuren beschrieben werden. Es zeigen:
- Figur 1: eine schematische Darstellung eines ersten Ausführungsbeispiels eines Versorgungsfahrzeuges,
- Figur 2: das erste Ausführungsbeispiel mit einer teilweise abgesenkten Übergabeplattform,
- Figur 3: das erste Ausführungsbeispiel mit einer teilweise bis zum Boden abgesenkten Übergangsplattform,
- Figur 4: das erste Ausführungsbeispiel mit einer über das Fahrerdach angehobenen Übergabeplattform,
- Figur 5: eine schematische Darstellung einer Ausführungsform einer Übergabeplattform, und
- Figur 6: schematische Darstellung eines zweiten Ausführungsbeispiels eines Versorgungsfahrzeugs.

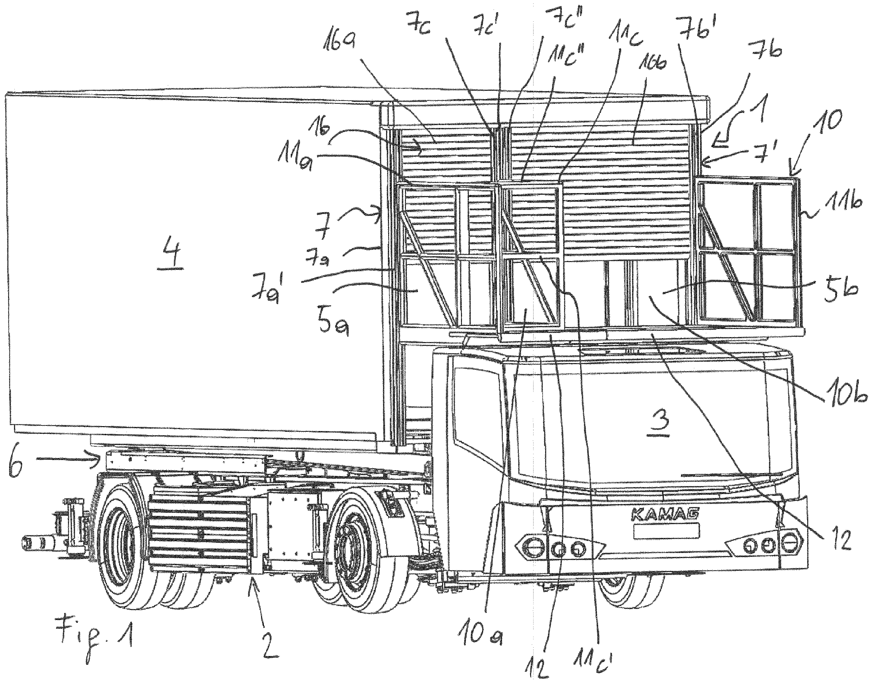

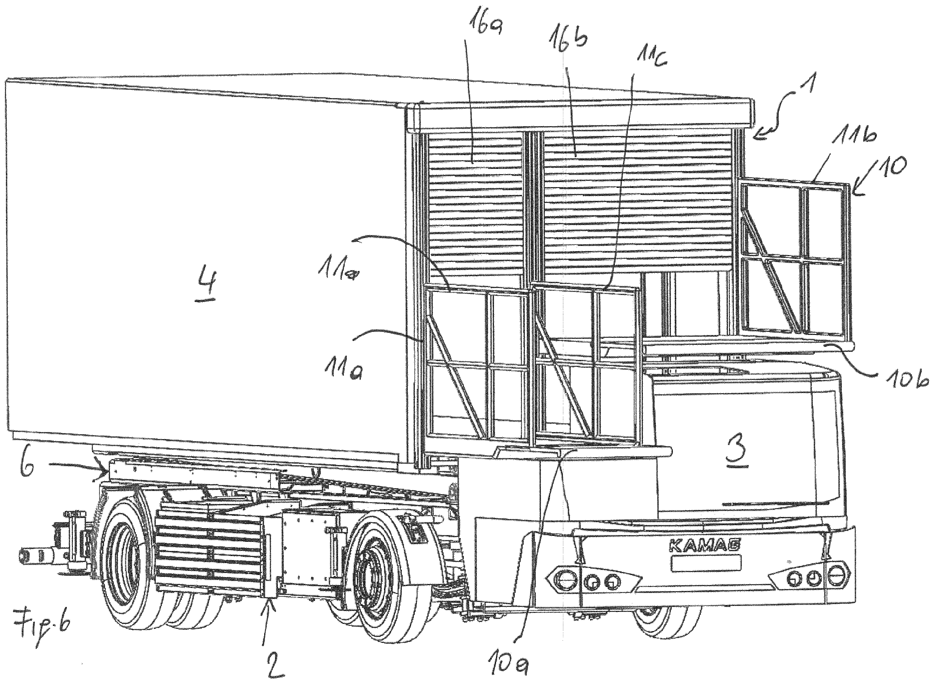

In den Figuren 1 bis 4 ist nun ein allgemein mit 1 bezeichnetes erstes Ausführungsbeispiel eines Versorgungsfahrzeugs dargestellt, weiches insbesondere zum Be- und/oder Entladen von Flugzeugen dient. Dieses weist in an sich bekannter Art und Weise ein Fahrwerk 2 und ein Fahrerhaus 3 auf, welches seitlich zur Fahrrichtung des Versorgungsfahrzeugs 1 in einer ebenfalls an und für sich bekannten und daher nicht mehr näher beschriebenen Art und Weise versetzbar, insbesondere verschiebbar ist. Das Fahrerhaus 3 ist derart ausgebildet, dass in ihm zwei oder mehr Personen Platz nehmen können, es weist also eine Breite auf, welche deutlich größer ist als die Breite eines sogenannten Einmann-Fahrerhauses ist, welches bei der weiter unten anhand der Figur 6 beschriebenen zweiten Ausführungsbeispiel des Versorgungsfahrzeugs 1 vorhanden ist. Derartige für mehrere Personen vorgesehene Fahrerhäuser 3 erstrecken sich üblicherweise über die gesamte Breite des Versorgungsfahrzeugs 1 oder sind nur geringfügig schmäler.

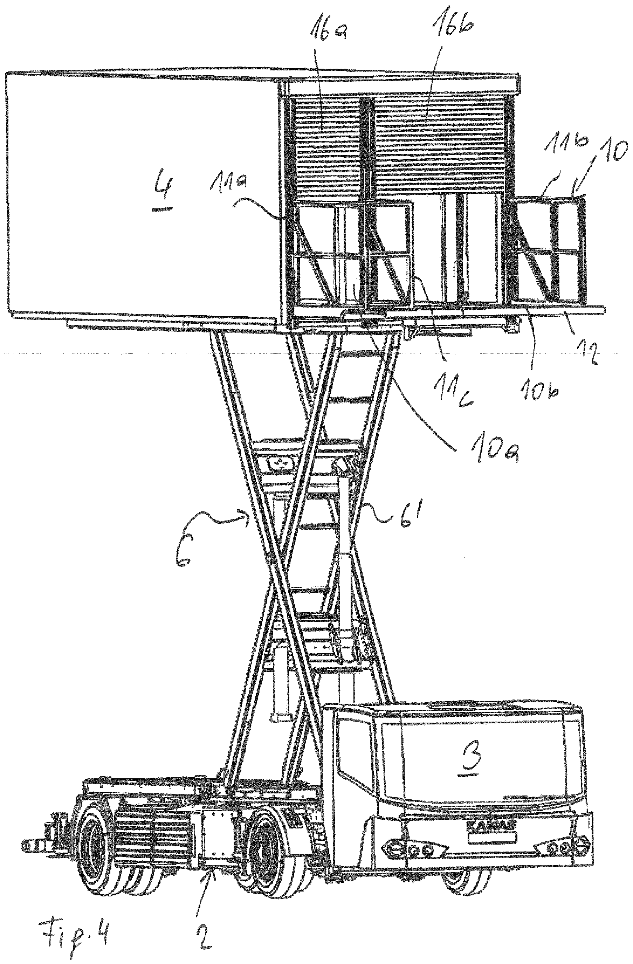

Auf dem Fahrwerk 2 des Versorgungsfahrzeugs 1 ist ein Kofferaufbau 4 angeordnet, welcher von einer Hubeinrichtung 6, die in dem hier gezeigten Fall als Hubschere 6' ausgebildet ist (siehe dazu Figur 4) anhebbar ist. Der Kofferaufbau 4 kann entweder starr mit der Hubeinrichtung 6 verbunden oder austauschbar ausgeführt sein.

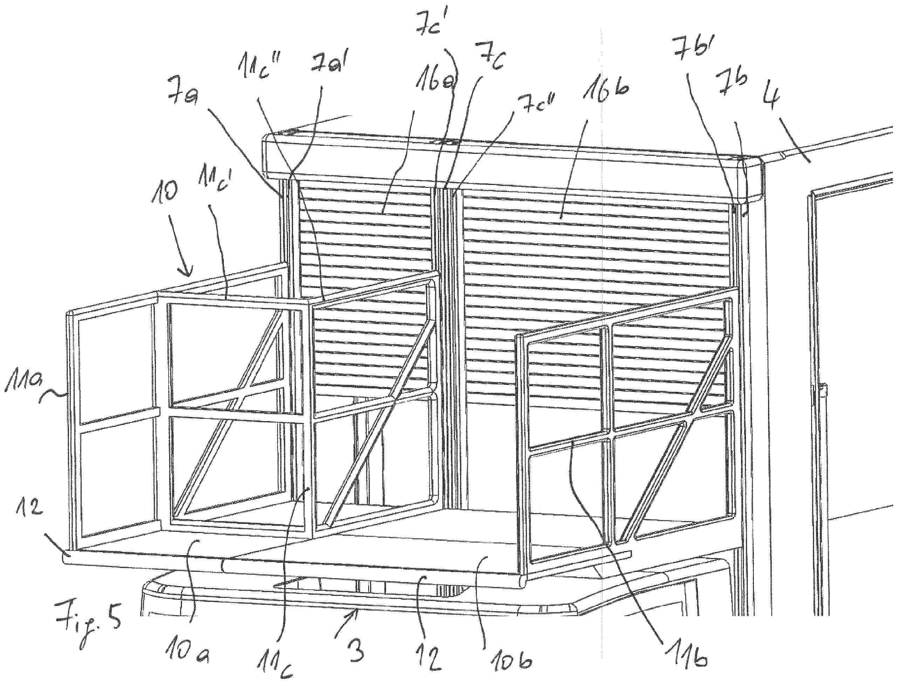

Im Kofferaufbau 4 sind an seinen beiden Außenseiten Führungselemente 7a und 7b von Führungseinrichtungen 7 und 7' angeordnet, in deren Laufschienen 7a', 7b' eine in Figur 5 näher dargestellte Übergabeplattform 10 verschiebbar ist. Diese Übergabeplattform 10 weist eine Absturzschutzeinrichtung, vorzugsweise in der Form von an ihren beiden Längsseiten angeordneten Absperrungen, z. B. Geländer 11a und 11b, auf. Diese Geländer 11a, 11b sind vorzugsweise teleskopierbar ausgebildet, sodass diese nach dem Anlegen der Übergangsplattform an das zu be- und/oder entladende Flugzeug die vorderen Enden der Geländer 11a, 11b zu ihrer Annäherung an die Haut des zu be- und/oder entladenden Flugzeugs und derart zur Verringerung des zwischen der Übergabeplattform 10 und dem Flugzeug gegebenen Freiraums und somit zur Ausbildung eines Absturzschutzes vorgeschoben werden können.

Nicht gezeigt sind in den Figuren ein Anfahrschutz der Übergabeplattform 10 sowie weitere Bauteile, welche für ein sicheres Annähern des Versorgungsfahrzeugs 1 und somit der Übergabeplattform 10 an das Flugzeug dienen. Das wie vorstehend beschriebene Versorgungsfahrzeug ist, z. B. aus der eingangs genannten EP 1 193 175 A2 bekannt und muss daher nicht mehr im Detail erläutert werden.

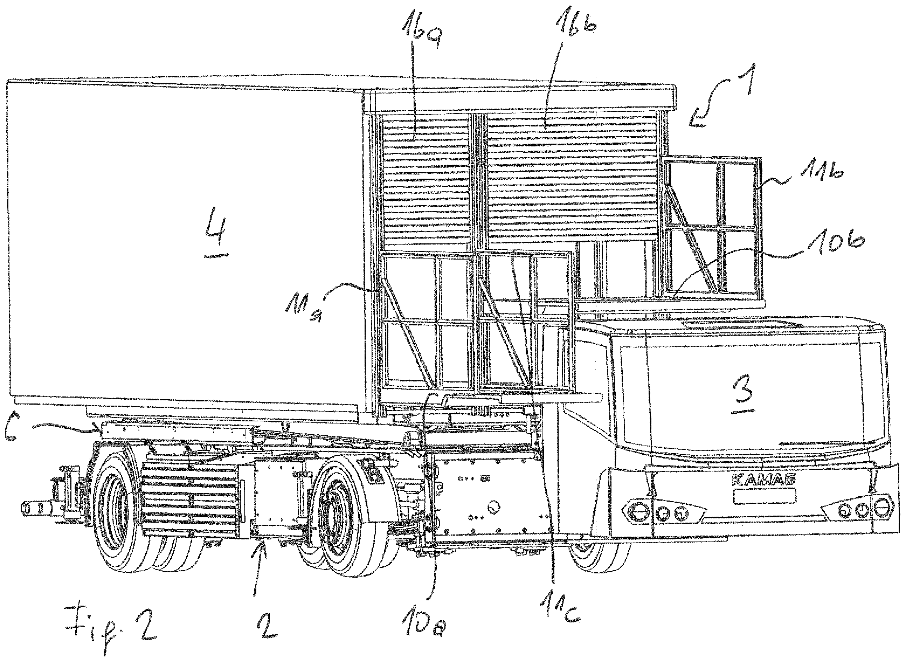

Wie aus den Figuren 1 und 2 ersichtlich ist, ist die Übergabeplattform 10 über dem Fahrerhaus 3 in einer durch die Höhe des Fahrerhauses 3 sowie dessen Anordnung am Fahrwerk 2 vorgegebenen Höhe, die im Folgenden als "Plattformhöhe" bezeichnet wird und in der Praxis 1,8 bis 2 Meter beträgt, angeordnet. Die Übergabeplattform 10 liegt somit in dieser Plattformhöhe über dem Dach des Fahrerhauses 3.

Größere Flugzeuge wie z. B. Flugzeuge des Typs A 320, A330, A340, F 100, MD80, DE9 sowie B727, B737 und B747, um nur einige Beispiele zu nennen, haben typischerweise eine Übergabehöhe, die größer als die Pfattformhöhe ist und in der Regel über ca. 2 Meter liegt. Die vorstehend definierte Plattformhöhe ist somit geringer als die Übergabehöhe dieser Flugzeuge. Zum Be- und Entladen kann folglich - wie in Figur 4 dargestellt und weiter unten noch beschrieben - der Kofferaufbau 4 und somit die an ihm angeordnete Übergabeplattform 10 angehoben werden, bis diese erste Übergabehöhe erreicht ist. Die Übergabeplattform 10 wird hierbei von der Hubeinrichtung 6 über das Dach des Fahrerhauses 3 angehoben.

Kleinere Flugzeuge wie z. B. Flugzeuge des Typs F27, F50, Saab SF 340 YAK-40 und BAe-146/748, um wiederum nur einige Beispiel zu nennen, haben in der Regel eine Übergabehöhe, die kleiner als die Plattformhöhe ist und beispielsweise kleiner als ca. 2 Meter ist. Um derartige Flugzeuge zu beladen und/oder zu entladen, muss also die Übergabeplattform 10 auf eine zweite Übergabehöhe abgesenkt werden, welche unter der Plattformhöhe der Übergabeplattform 10 in ihrer Fahrposition und somit in einer Höhe, die geringer als die Höhe des Dachs des Fahrerhauses 3 ist, liegt.

Um nun zu erreichen, dass mit dem beschriebenen Versorgungsfahrzeug 1 sowohl Flugzeuge, bei denen eine erste Übergabehöhe, die größer als die Plattformhöhe ist, erforderlich ist, als auch Flugzeuge, bei denen eine zweite Übergabehöhe kleiner als die Plattformhöhe ist, sodass zum Be- und/oder Entladen des Flugzeugs die Übergabeplattform 10 auf eine Höhe abgesenkt werden muss, die unter der Höhe des Dachs des Fahrerhauses 3 und somit unter der Plattformhöhe liegt, wird nun Folgendes vorgeschlagen:
Wie am besten aus Figur 2 sowie aus Figur 5 ersichtlich, ist bei dem beschriebenen Versorgungsfahrzeug 1 vorgesehen, dass die Übergabeplattform 10 in ihrer Breite geteilt ist. Sie weist einen ersten Plattformteil 10a, der in der Darstellung der Figuren der linke Plattformteil ist, und einem zweiten Plattformteil 10b, der in der Darstellung der Figuren der rechte Plattformteil ist. Der erste Plattformteil 10a weist eine Breite b₁ und der zweite Plattformteil eine Breite b₂ auf, die Gesamtbreite b = b₁ + b₂ der Übergabeplattform 10 beträgt hierbei vorzugsweise die gesamte Breite des Kofferaufbaus 4. Bevorzugt wird aber, dass die Breite b der Übergabeplattform 10 - wie oft von entsprechenden Richtlinien und/oder Normen gefordert - so groß ist, dass nicht nur die Türöffnung des Flugzeugs, sondern auch die geöffnete Flugzeugtür innerhalb des durch die beiden Geländer 11a und 11b begrenzten Raums liegt. Typischerweise beträgt - wie eingangs aufgeführt - die typische Breite b der gesamten Übergabeplattform 10 ungefähr 1,8 bis 2,0 m. Bevorzugt wird, dass die Breite b₁ des ersten Plattformteils 10a mindestens 700 mm beträgt, wie dies von der eingangs zitierten DIN-Norm gefordert ist.

Wie aus den Figuren ersichtlich, ist im Kofferaufbau 4 ein drittes Führungselement 7c mit dritten Laufschienen 7c' und 7c" vorgesehen, welche parallel zu den Führungselementen 7a und 7b angeordnet ist. Der Plattformteil 10a der Übergabeplattform 10 wird folglich in dem ersten Führungselement 7a und der ersten Laufschiene 7c' des dritten Führungselements 7c der ersten Führungseinheit 7 und der zweite Plattformteil 10b in der zweiten Laufschiene 7c" des dritten Führungselements 7c und dem zweiten Führungselement 7b der zweiten Führungseinheit 7' geführt. Wird nun - wie in Figur 2 dargestellt - das Fahrerhaus nach links verschoben, kann aufgrund der Teilung der Übergabeplattform der in den Figuren linke und in Fahrtrichtung rechte erste Plattformteil 10a seitlich vom Fahrerhaus 3 abgesenkt werden, bis die Übergabeplattform 10 eine untere Endposition erreicht hat, in welcher sie vorzugsweise mit dem Boden des Kastenaufbaus 4 fluchtet, sodass die aus dem Kastenaufbau 4 zu entladenden Güter, beim Catering insbesondere die Speisen enthaltenden Trolleys, leicht aus dem Kofferaufbau 4 entnommen werden können.

Vorzugsweise ist vorgesehen, dass die Übergangsplattform 10 ein drittes Geländer 11c besitzt, welches am ersten Plattformteil 10a angeordnet ist, sodass es zusammen mit diesem Plattformteil 10a angehoben und abgesenkt werden kann. Wie am besten aus der Figur 5 ersichtlich ist, ist vorzugsweise vorgesehen, dass dieses Geländer 11c zweiteilig ausgebildet ist, wobei der vordere Geländerteil 11c' gegenüber dem hinteren Geländerteil 11c" verschwenkbar ist. Vorzugsweise ist die Länge dieses vorderen Geländerteils 11c' des mittleren dritten Geländers 11c derart bemessen, dass - wie am Besten aus Figur 5 ersichtlich ist - durch ein Verschwenken dieses vorderen Geländerteils 11c' gegenüber dem hinteren Geländerteil 11c" eine Absperrung ausgebildet wird, welche bewirkt, dass insbesondere während des Anhebens und Absenken des ersten Plattformteils 10a ein darauf stehende Bediener nicht zu weit nach vorne treten kann. In vorteilhafter Art und Weise wird somit hier eine Absturzsicherung für den Bediener beim Anheben und/oder Absenken des ersten Plattformteils 10a ausgebildet.

Vorzugsweise ist vorgesehen, dass die hinter der Übergabeplattform 10 liegende Wand des Kofferaufbaus 4 zwei Ladeöffnungen 5a und 5b aufweist, welche durch entsprechende Verschlusseinrichtungen 16 öffen- und schließbar sind. Bevorzugt wird hierbei, dass diese Verschlusseinrichtungen 16 als Rolltore 16a und 16b ausgebildet sind, wobei das erste Rolltor 16a vorzugsweise zwischen der ersten und der dritten Laufschiene 7a' und 7c' und das zweite Rolltor 16b zwischen der dritten und der zweiten Laufschiene 7c' und 7b' geführt sind. Der übersichtlichen Darstellung halber sind in den Figuren die beiden Rolltore 16a und 16b in einer teilweise geöffneten Stellung gezeigt, welche nicht notwendigerweise mit der Stellung übereinstimmt, welche sie in der in den Figuren gezeigten Stellung der Übergabestation 10 einnehmen. Bei der folgenden Funktionsbeschreibung des Versorgungsfahrzeugs 1 wird jedoch die jeweilige Stellung der Rolltore 16a und 16b im Bezug auf den jeweils durchzuführenden Schritt des Be- und/oder Entladevorgangs erläutert. Es ist noch darauf hinzuweisen, dass diese Funktionsbeschreibung des Versorgungsfahrzeugs 1 nur exemplarischen Charakter besitzt, insbesondere was die Position der Rolltore 16a und 16b betrifft. Dem Fachmann ist aus der nachfolgenden Beschreibung dieses exemplarischen Funktionsablaufs klar ersichtlich, dass - abhängig vom jeweiligen Einsatzzweck und sonstigen Betriebsbedingungen - eine Vielzahl von Variationen möglich sind.

Das Versorgungsfahrzeug 1 wird zum Flugzeug bewegt. Hierbei befindet sich die Übergabestation 10 in ihrer Fahrposition über dem Dach des Fahrerhauses 3, die beiden Rolltore 16a und 16b des Kastenaufbaus 4 sind geschlossen.

Ist das Versorgungsfahrzeug 1 nun vor dem zu beladenden Flugzeug geparkt, betritt der Bediener den Kastenaufbau 4. In diesem ist vorzugsweise ein Bedienterminal vorgesehen, durch welches die Bewegung der Übergabeplattform 10, die Hubeinrichtung 6 sowie vorzugsweise weiterer, zum Andocken der Übergabeplattform 10 an das Flugzeug erforderlichen Einrichtungen gesteuert werden kann. Bevorzugt wird, obwohl dies nicht zwingend erforderlich ist, dass durch das Bedienterminal auch die Verschiebebewegung des Fahrerhauses 3 gesteuert werden kann. Es ist natürlich auch möglich, dass diese Bewegung vom Fahrerhaus 3 aus gesteuert ist. Bevorzugt wird, dass zu diesem Zeitpunkt das erste Rolltor 16a geschlossen ist, sodass bei der nachfolgend durchgeführten Bewegung des ersten Plattformteils 10a die Gefahr von Verletzungen ausgeschlossen oder zumindest deutlich reduziert ist. Auch wird bevorzugt, dass zu diesem Zeitpunkt der vordere Geländerteil 11c' - wie in Figur 5 dargestellt - in Richtung des äußeren Geländers 11a geklappt wurde, sodass hierdurch der hintere Bereich des ersten Plattformteils 10a, also der Bereich zwischen dem hinteren Geländerteil 11c" und dem ersten Geländer 11a, abgesperrt ist. Dies bewirkt, dass der Bediener der Übergabeplattform 10 nicht zu weit auf dieser vortreten kann.

Dann wird das Fahrerhaus 3 in den Figuren nach rechts, in Fahrtrichtung des Versorgungsfahrzeugs 1 somit nach links verschoben, sodass in Fahrtrichtung rechts vom Fahrerhaus 3 ein Freiraum entsteht, der es erlaubt, das erste Plattformteil 10a in seine untere Endstellung abzusenken. Jetzt kann das Rolltor 16a geöffnet werden. Dann wird durch eine entsprechende Hubbewegung der Hubeinrichtung 6 der Kofferaufbau 4 samt der Übergabeplattform 10 angehoben, bis die zweite Übergabehöhe erreicht ist. Es werden vorzugsweise vordere Zungen 12 der Übergabeplattform 10, zumindest im Bereich des ersten Plattformteils 10a, vorgeschoben, um den Zwischenraum zwischen der Vorderkante der Übergabeplattform 10 und der Außenhaut des Flugzeugs zu verringern.

Bevorzugt wird des Weiteren, dass das erste Geländer 11a teleskopartig nach vorne geschoben wird, um die Absturzsicherheit des Bedieners zu erhöhen.

Nachdem die Übergabeplattform 10, also der erste Plattformteil 10a, in der zweiten Übergangshöhe positioniert wurde, also keine weitere Bewegung der Übergabeplattform 10 zu diesem Zeitpunkt erforderlich ist, kann der Bediener durch das geöffnete Rolltor 16a die Übergabeplattform 10 betreten. Vorzugsweise ist vorgesehen, dass das abgewinkelte vordere Geländerteil 11c' des mittleren Geländers 11c erst dann aus seiner die vorstehend beschriebene Absicherung ausbildenden Stellung bewegt werden kann, wenn der erste Plattformteil 10a die zweite Übergangshöhe erreicht hat. Dann wird das vordere Geländerteil 11c' wieder in seine Ausgangsstellung zurückbewegt sodass dann das mittlere Geländer 11c im Wesentlichen parallel zu dem ersten Geländer 11a verläuft. Vorzugsweise wird dann das mittlere Geländer 11c - wie das erste Geländerteil 11a - nach vorne geschoben, bis sich die vordere Kante des mittleren Geländerteils 11c hinreichend weit der Außenhaut des Flugzeugs angenähert hat. Ein Durchgang zwischen der Flugzeugtür und dem Kofferaufbau 4 ist somit frei. Der Be- und/oder Entladevorgang kann vom Bedienungspersonal durchgeführt werden. Das Versorgungsfahrzeug 1 befindet sich dann in seiner in Figur 2 gezeigte Konfiguration. Vorzugsweise ist hierbei vorgesehen, dass - entgegen der Darstellung der Figur 2 - das zweite Rolltor 16b geschlossen ist, sodass das Innere des Kofferaufbaus 4 nur durch das erste Rolltor 16a zugänglich ist. Dies besitzt den Vorteil, dass hierdurch Temperaturverluste im Kofferaufbau 4 reduziert werden.

Nachdem der Be- und/oder Entladevorgang durchgeführt ist, tritt der Bediener zurück in den Kastenaufbau 4 und schließt das vordere Geländerteil 11c', nachdem dieses, falls erforderlich, von seiner ausgefahrenen Stellung in seine nicht-teleskopierte Stellung zurückbewegt wurde. Dann wird das erste Rolltor 16a geschlossen. Das erste Plattformteil 10a wieder angehoben und der Kofferaufbau 4 gegebenenfalls auf seine ursprüngliche Höhe abgesenkt.

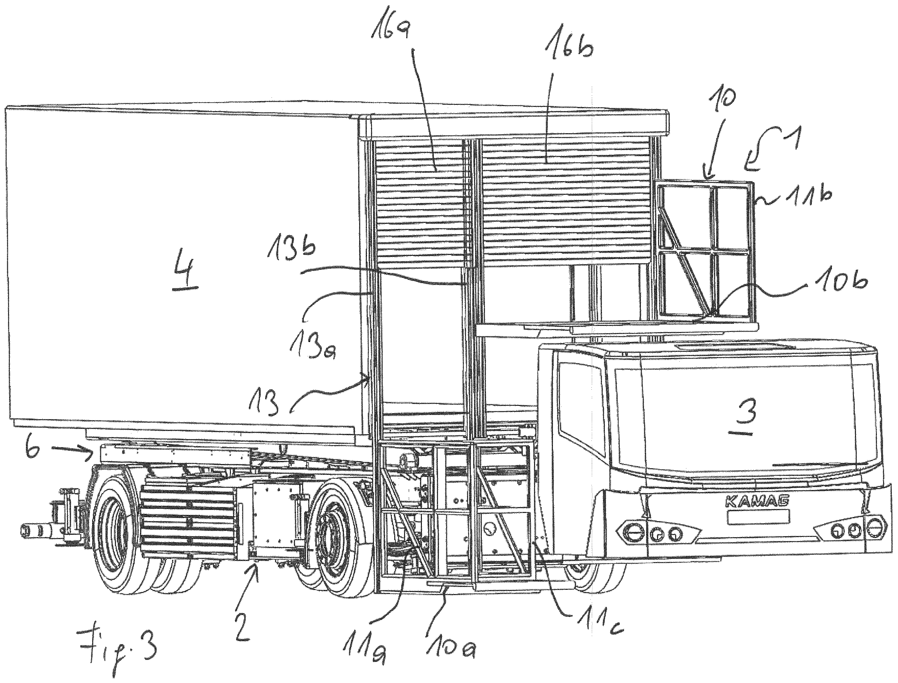

Bevorzugt wird hierbei, dass - wie in Figur 3 dargestellt - das erste Plattformteil 10a der Übergabeplattform 10 in einem Zwischenrahmen 13 geführt ist, der Laufschienen 13a und 13b besitzt. Diese sind wiederum in den Führungselementen 7a und 7c verschiebbar geführt. Eine derartige Maßnahme besitzt den Vorteil, dass hierdurch der erste Plattformteil 10a der Übergabeplattform 10 bis zum Boden abgesenkt werden kann und so die Funktion eines Bodenlifts ausbilden kann. Aus Gründen der Arbeitssicherheit wird bevorzugt, dass die Übergabeplattform 10 ein weiteres Bedienpult aufweist, welches von einem auf dem ersten Plattformteil 10a befindlichen Benutzer gesteuert werden kann. Es wird bevorzugt, dass dieses weitere Bedienpult in einem Bereich des zweiten Plattformteils 10a angeordnet ist, der von dem durch das hintere Geländerteil 11c", das abgewinkelte vordere Geländerteil 11c und den entsprechenden Bereich des äußeren Geländers 11a begrenzt ist. Hierdurch wird in vorteilhafter Art und Weise ein Abstürzen des Bedieners verhindert.

Vorzugsweise ist vorgesehen, dass Quetsch- und Scherstellen zwischen dem Kofferaufbau 4 und der Übergabeplattform 10 durch Lichtschranken abgesichert und derartige Stellen zwischen dem ersten Plattformteil 10a und dem zweiten Plattformteil 10b durch einen mechanischen Teleskopschutz abgesichert sind.

Das Be- und/oder Entladen von Flugzeugen, bei denen die vorstehend beschriebene erste Übergangshöhe erforderlich ist, wird nun wie aus der Figur 4 ersichtlich vorgegangen: Mittels der Hubeinrichtung 6 wird der Kofferaufbau 4 bei vorzugsweise geschlossenen Rolltoren 16a, 16b solange angehoben, bis zwischen der derart mit angehobenen Übergabeplattform 10 und dem Dach des Fahrerhauses 3 so viel Platz vorhanden ist, dass die Übergabeplattform 10, also sowohl der erste Plattformteil 10a als auch der zweite Plattformteil 10b, in ihre untere Endstellung abgesenkt werden kann, in welcher die Bodenfläche der Übergabeplattform 10 mit dem Boden des Kofferaufbaus 4 fluchtet. Das Rolltor 16a kann jetzt geöffnet werden, ohne dass eine Verletzungsgefahr für den Bediener besteht, insbesondere durch die sich bewegende Übergabeplattform 10 oder eine Stufe zwischen der Übergabeplattform 10 und dem Boden des Kofferaufbaus 4.

Dann wird erforderlichenfalls der Kofferaufbau 4 zusammen mit der an ihm befestigten Übergabeplattform 10 solange angehoben, bis die erste Übergabehöhe erreicht ist. Falls gewünscht oder erforderlich, kann auch das zweite Rolltor 16b geöffnet werden. Vorzugsweise werden das erste und das zweite Geländer 11a und 11b teleskopartig nach vorne geschoben, um den Freiraum zwischen der Vorderkante der beiden Geländer 11a und 11b und der Außenhaut des Flugzeugs auf ein hinreichend geringes Maß verringert ist. Vorzugsweise werden dann auch wieder die vorstehend beschriebenen Zungen 12 ausgefahren.

Der Bediener kann nun die Übergabeplattform 10 in der ersten Übergabehöhe durch das geöffnete erste Rolltor 16a betreten, und zwar den hinteren Bereich des Plattformteils 10a, welcher durch das hintere Geländerteil 11c" und das Geländer 11a sowie nach vorne durch das abgewinkelte vordere Geländerteil 11c begrenzt ist. Die durch das abgewinkelte vordere Geländerteil 11c ausgebildete Absicherung wirkt einem unbeabsichtigten zu weit nach vorne treten des Bedieners entgegen. Um in den vorderen Bereich der Übergabeplattform zu gelangen, muss dieser erst diese Absperrung lösen. Zum Ent- bzw. Beladen des Kofferaufbaus 4 und somit zum Be- bzw. Entladen des Flugzeugs sind nun mehrere Varianten möglich: Bevorzugt wird, dass der Bediener, nachdem er den hinteren Bereich des ersten Plattformteils 10a verlassen hat, den vorderen Geländerteil 11c' wieder - wie in Figur 4 dargestellt - zurückschwenkt, sodass ihm die gesamte Breite b des vorderen Bereichs der Übergabeplattform 10 zum Be- oder Entladen zur Verfügung steht. Bevorzugt wird hierbei ebenfalls, dass dieser Be- oder Entladevorgang nur über eines der beiden Rolltore 16a, 16b, vorzugsweise über das zweite Rolltor 16b, erfolgt, das dann geöffnet wird. Eine derartige Vorgangsweise ist wieder aus Gründen eines geringeren Temperaturverlusts beim Entladevorgang bevorzugt.

Es ist aber auch möglich, dass das mittlere Geländer 11c derart ausgebildet ist, dass der vordere Geländerteil 11c' ganz zurückschwenkbar ist, dass er also hier in diesem geschwenkten Zustand im Wesentlichen parallel zum hinteren Geländerteil 11c" liegt. Hierdurch wird ein Durchgang zu ersten Rolltor 16a ausgebildet, sodass auch durch dieses Rolltor 16a entladen werden kann. Eine gleichzeitige Ladeoperation durch die Rolltore 16a und 16b ist dann vorteilhaft, wenn zwei Bedienpersonen auf der Übergabeplattform 10 sind.

Mit der vorstehenden Beschreibung wird davon ausgegangen, dass die der Übergabeplattform 10 zugewandte Wand des Kofferaufbaus 4 durch zwei Verschlusseinrichtungen 5a, 5b, hier der beiden Rolltore 16a und 16b, verschließbar ist. Es war aus der vorstehenden Beschreibung aber ersichtlich, dass dies nicht zwingend ist. Es ist, obwohl diese Regel nicht bevorzugt wird, auch möglich, eine einzige Verschlussvorrichtung, z. B. ein einziges Rolltor, vorzusehen. Ebenfalls ist es möglich, dass die Wand des Kofferaufbaus 4 durch mehr als zwei Rolltore 16a, 16b oder ähnliche Verschlusseinrichtungen verschließbar ist.

In den Figuren nicht gezeigt sind die zur Bewegung der Übergabeplattform 10 erforderlichen Aggregate, insbesondere Hubzylinder, bei denen die vorstehend beschriebenen Bewegungen des ersten Plattformteils 10a und des zweiten Plattformteils 10b durchgeführt werden. Einem Fachmann sind derartige Bauteile bekannt, sodass sie nicht näher erläutert werden müssen.

In Figur 6 ist ein zweites Ausführungsbeispiel des Versorgungsfahrzeugs 1 dargestellt, das in seinem Grundaufbau nach demjenigen der ersten Ausführungsform entspricht. Einander entsprechende Bauteile werden daher mit den gleichen Bezugszeichen versehen und nicht mehr näher beschrieben. Das Versorgungsfahrzeug 1 des zweiten Ausführungsbeispiels weist somit eine über dem Dach des Fahrerhauses 3 angeordnetes zweites Plattformteil 10b und ein seitlich neben dem Fahrerhaus 3 auf und ab bewegbares erstes Plattformteil 10a auf, welche zusammen die Übergabeplattform 10 ausbilden.

Der wesentliche Unterschied zwischen den beiden Ausführungsbeispielen ist, dass das Fahrerhaus 3 deutlich schmäler als das Fahrerhaus 3 des ersten Ausführungsbeispiels ausgebildet ist. Es handelt sich hierbei um ein typisches Einmann-Fahrerhaus, welches auch als "Halbschnitt" bezeichnet wird. Typischerweise nimmt ein derartiges Fahrerhaus 3 weniger als die halbe Fahrzeugbreite ein, sodass neben dem Fahrerhaus 3 des zweiten Ausführungsbeispiels ein Freiraum gegeben ist, in dem das erste Plattformteil 10a auf und ab bewegt werden kann. Dem Fachmann ist ersichtlich, dass diese Konstruktion nicht auf ein Einmann-Fahrerhaus beschränkt ist. Bei einer hinreichend großen Fahrzeugbreite ist es natürlich möglich, das Fahrerhaus 3 breiter als für eine einzige Person auszubilden, solange hinreichend Platz vorhanden ist, um das erste Plattformteil 10a der Übergabeplattform 10 entsprechend zu bewegen.

Der Ablauf einer Be- und/oder Entladeoperation entspricht nun derjenigen des ersten Ausführungsbeispiels: Soll die Übergabeplattform 10 in die erste Übergabehöhe bewegt werden, welche annahmegemäß größer als die Höhe des Dachs des Fahrerhauses 3 ist, so werden als erste Plattformteil 10a und das in seiner Fahrposition über dem Dach des Fahrerhauses 3 angeordnete zweite Plattformteil 10b der Übergabeplattform 10 zusammen angehoben, sodass in der ersten Übergabehöhe wieder die gesamte Breite b der Übergabeplattform 10 zur Verfügung steht. Bei einem Be- und/oder Entladen des Flugzeugs bei der zweiten Übergabehöhe steht dann wieder, wie beim ersten Ausführungsbeispiel, das erste Plattformteil 10a zur Verfügung.

Der Vorteil einer derartigen Konstruktion ist, dass es in diesem Fall nicht erforderlich ist, dass das Fahrerhaus 3 versetzbar ausgebildet sein muss. Eine derartige Maßnahme führt zu einem einfacheren mechanisch-konstruktiven Aufbau des Versorgungsfahrzeugs und somit zu kostengünstigeren Herstellungskosten.

Zusammenfassend ist festzuhalten, dass die beschriebenen Maßnahmen ein Versorgungsfahrzeug 1, insbesondere ein Versorgungsfahrzeug für ein Flugzeug, hierbei insbesondere ein Catering-Fahrzeug, ausgebildet wird, welches sich dadurch auszeichnet, dass infolge der Teilung der Übergabeplattform 10 es ermöglicht wird, einen Teil dieser Übergabeplattform 10, hier den ersten Plattformteils 10a, abzusenken, nachdem das Fahrerhaus 3 entsprechend seitlich versetzt wurde. Durch diese Maßnahme wird es ermöglicht, dass das beschriebene Versorgungsfahrzeug 1 auch dann einzusetzen, wenn die für den Be- und/oder Entladevorgang erforderliche Übergangshöhe unter der Plattformhöhe der Übergabeplattform 10 liegt. In vorteilhafter Weise steht ein hinreichend breiter Teil der Übergabeplattform 10 für Be- und/oder Entladevorgänge zur Verfügung. Bei Übergabehöhen über der Piattformhöhe ist aber weiterhin die volle Breite der Übergabeplattform 10 gegeben.

Das beschriebene Versorgungsfahrzeug 1 eignet sich daher insbesondere zum Be- und/oder Entladen von Flugzeugen.

## Patentansprüche

1. Versorgungsfahrzeug, insbesondere ein Versorgungsfahrzeug zum Be- und/oder Entladen von Flugzeugen, welches ein Fahrwerk (2) mit einem Fahrerhaus (3) aufweist, wobei das Versorgungsfahrzeug eine höhenverstellbare Übergabeplattform (10) aufweist, die über dem Fahrerhaus (3) angeordnet und in einer ersten Übergangshöhe, die über dem Dach des Fahrerhauses liegt, anordnet ist oder in diese erste Übergangshöhe bewegbar ist, und wobei die Übergabeplattform (10) in ihrer Breite geteilt ausgeführt ist und einen ersten Plattformteil (10a) und zumindest einen über dem Fahrerhaus (3) angeordneten zweiten Plattformteil (10b) aufweist, **dadurch gekennzeichnet, dass** der erste Plattformteil (10a) unabhängig vom zweiten Plattformteil (10b) der Übergabeplattform (10) seitlich des Fahrerhauses (3) in eine zweite Übergabehöhe, die geringer als die Höhe des Fahrerhauses (3) ist, absenkbar und anhebbar ist.

2. Versorgungsfahrzeug nach Anspruch 1, **dadurch gekennzeichnet, dass** das Fahrerhaus (3) zumindest in einer Richtung derart weit quer zur Fahrtrichtung des Versorgungsfahrzeugs (1) versetzbar ist, dass das erste Plattformteil (10a) der Übergabeplattform (10) seitlich des derart versetzten Fahrerhauses (3) absenkbar und anhebbar ist.

3. Versorgungsfahrzeug nach Anspruch 1, **dadurch gekennzeichnet, dass** das Fahrerhaus (3) nicht-versetzbar im Versorgungsfahrzeug (1) angeordnet ist, und dass seitlich neben diesem feststehenden Fahrerhaus (3) das anhebbare und absenkbare erste Plattformteil (10a) angeordnet ist, und dass über dem Dach des Fahrerhauses (3) das zweiten Plattformteil (10b) angeordnet ist, wobei das erste Plattformteil (10a) und das zweite Plattformteil (10b) zumindest in eine über dem Dach des Fahrerhauses liegende erste Übergabehöhe der Übergabeplattform (10) bewegbar sind.

4. Versorgungsfahrzeug nach Anspruch 1, **dadurch gekennzeichnet, dass** der erste Plattformteil (10a) sowie der zweite Plattformteil (10b) der Übergabeplattform (10) jeweils von einer Führungseinrichtung (7; 7') geführt sind.

5. Versorgungsfahrzeug nach Anspruch 4, **dadurch gekennzeichnet, dass** die Führungseinrichtung (7) zwei Laufschienen (7a', 7c') besitzt, in denen der erste Plattformteil (10a) der Übergabeplattform (10) verschieblich geführt ist, und dass das zweite Plattformteil (10b) von einer der Laufschienen (7c') der ersten Führungseinrichtung (7) und von einer weiteren Laufschiene (7b)' der weiteren Führungseinrichtung (7') geführt ist.

6. Versorgungsfahrzeug nach einem der vorangehenden Ansprüche, **dadurch gekennzeichnet, dass** die Führungseinrichtung (7) für das erste Plattformteil (10a) der Übergabeplattform (10) einen Zwischenrahmen (13) mit Laufschienen (13a, 13b) besitzt.

7. Versorgungsfahrzeug nach einem der vorangehenden Ansprüche, **dadurch gekennzeichnet, dass** die Laufschienen (7a, 7c) für das erste Plattformteil (10a) in einem Kofferaufbau (4) des Versorgungsfahrzeugs (1) angeordnet sind.

8. Versorgungsfahrzeug nach einem der vorangehenden Ansprüche, **dadurch gekennzeichnet, dass** das weitere Führungselement (7b) für das zweite Plattformteil (10b) im Kofferaufbau (4) angeordnet ist.

9. Versorgungsfahrzeug nach einem der vorangehenden Ansprüche, **dadurch gekennzeichnet, dass** das Versorgungsfahrzeug (1) eine Hubeinrichtung (6) aufweist, durch welche der Kofferaufbau (4) auf die erste Übergabehöhe und/oder auf die zweite Übergabehöhe bewegbar ist.

10. Versorgungsfahrzeug nach einem der vorangehenden Ansprüche, **dadurch gekennzeichnet, dass** die Übergabeplattform (10) eine Absturzschutzeinrichtung aufweist.

11. Versorgungsfahrzeug nach Anspruch 10, **dadurch gekennzeichnet, dass** die Absturzschutzeinrichtung mindestens eine an einer Längsseite der Übergabeplattform (10) angeordnete Absperrung aufweist.

12. Versorgungsfahrzeug nach einem der vorangehenden Ansprüche, **dadurch gekennzeichnet, dass** die Übergabeplattform (10) zwei äußere Geländer (11a, 11b) sowie ein mittleres Geländer (11c), welches an dem ersten Plattformteil (10a) angeordnet ist, aufweist.

13. Versorgungsfahrzeug nach einem der vorangehenden Ansprüche, **dadurch gekennzeichnet, dass** das mittlere Geländer (11c) aus mindestens zwei Geländerteilen (11c', 11c") aufweist, wobei das vordere Geländerteil (11c) gegenüber dem hinteren Geländerteil (11b) beweglich ist.

14. Verwendung eines Versorgungsfahrzeugs zum Be- und/oder Entladen eines Flugzeugs, **dadurch gekennzeichnet, dass** als Versorgungsfahrzeug ein Versorgungsfahrzeug (1) nach einem der Ansprüche 1-13 verwendet wird.

15. Verfahren zum Be- und/oder Entladen eines Flugzeugs, **dadurch gekennzeichnet, dass** ein Versorgungsfahrzeug nach einem der Ansprüche 1-13 verwendet wird.

## Claims

1. Supply vehicle, in particular a supply vehicle for loading and/or unloading an aircraft, which has a chassis (2) with a driver's cabin (3), wherein the supply vehicle comprises a height-adjustable transfer platform (10), which is arranged above the driver's cabin (3) and is positioned in a first transition height, which is above the roof of the driver's cabin (3), or is movable to this first transition height, and wherein the transfer platform (10) is divided in its width and comprises a first platform part (10a) and at least one second platform part (10b), which is arranged above the driver's cabin (3), **characterized in that** the first platform part (10a) can be lowered and raised, independent of the second platform part (10b) of the transfer platform (10), laterally of the driver's cabin (3) into a second transition height, which is smaller than the height of the driver's cabin (3).

2. Supply vehicle according to claim 1, **characterized in that** the driver's cabin (3) can be displaced at least in one direction so far traversly to the direction of travel of the supply vehicle (1) that the first platform part (10a) of the transfer platform (10) can be lowered and raised laterally of the driver's cabin (3) offset in this way.

3. Supply vehicle according to claim 1, **characterized in that** the driver's cabin (3) is arranged non-displaceable in the supply vehicle (1), and that laterally of said fixed driver's cabin (3) the lowerable and raisable first platform part (10a) is arranged, and that above the roof of the driver's cabin (3) the second platform part (10b) is arranged, whereby the first platform part (10a) and the second platform part (10b) can be moved at least in a first transition height of the transform platform (10) above the roof of the driver's cabin (3).

4. Supply vehicle according to claim 1, **characterized in that** the first platform part (10a) as well as the second platform part (10b) of the transfer platform (10) are each guided by guiding means (7; 7').

5. Supply vehicle according to claim 4, **characterized in that** the guiding means (7) comprises two guide rails (7a', 7c'), in which the first platform part (10a) of the transfer platform (10) is displaceably guided, and that the second platform part (10b) is guided in one of the guide rails (7c') of the first guiding means (7) and by a further guide rail (7b') of the further guiding means (7').

6. Supply vehicle according to one of the previous claims, **characterized in that** the guiding means (7) for the first platform part (10a) of the transfer platform (10) comprises a intermediate frame (13) having sliding rails (13a, 13b).

7. Supply vehicle according to one of the previous claims, **characterized in that** the guide rails (7a, 7c) for the first platform part (10a) are arranged in a box body (4) of the supply vehicle (1).

8. Supply vehicle according to one of the previous claims, **characterized in that** the second guiding element (7b) for the second platform part (10b) is arranged in the box body (4).

9. Supply vehicle according to one of the previous claims, **characterized in that** the supply vehicle (1) comprises lifting means (6), by which the box body (4) can be moved into the first transition height and/or into the second transition height.

10. Supply vehicle according to one of the previous claims, **characterized in that** the transfer platform (10) comprises a fall protection means.

11. Supply vehicle according to claim 10, **characterized in that** the fall protection means comprises at least one barrier arranged on the longitudinal side of the transfer platform (10).

12. Supply vehicle according to one of the previous claims, **characterized in that** the transfer platform (10) comprises two outer barriers (11a, 11b) as well as a middle barrier (11c), which is provided on the first platform part (10a).

13. Supply vehicle according to one of the previous claims, **characterized in that** the middle barrier (11c) comprises at least two barrier elements (11c'; 11c"), whereby the front barrier element (11c) is moveable in respect to the rear barrier element (11b).

14. Use of a supply vehicle for loading and/or unloading an aircraft, **characterized in that** a supply vehicle (1) according to one of the claims 1-13 is used.

15. Method for loading and/or unloading of an aircraft, **characterized in that** a supply vehicle according to one of the claims 1-13 is used.

## Revendications

1. Véhicule de ravitaillement, en particulier véhicule de ravitaillement servant à charger et/ou à décharger des aéronefs, lequel présente un train de roulement (2) avec une cabine de conducteur (3), dans lequel le véhicule de ravitaillement présente une plate-forme de transfert (10) ajustable en hauteur, laquelle est disposée au-dessus de la cabine de conducteur (3) et est disposée à une première hauteur de transition, qui se situe au-dessus du toit de la cabine de conducteur, ou qui peut être déplacée à ladite première hauteur de transition et dans lequel la plate-forme de transfert (10) est réalisée de manière séparée dans sa largeur et présente une première partie de plate-forme (10a) et au moins une deuxième partie de plate-forme (10b) disposée au-dessus de la cabine de conducteur (3), **caractérisé en ce**
**que** la première partie de plate-forme (10a) peut être abaissée et soulevée indépendamment de la deuxième partie de plate-forme (10b) de la plate-forme de transfert (10), de manière latérale à la cabine de conducteur (3) à une deuxième hauteur de transfert, qui est inférieure à la hauteur de la cabine de conducteur (3) .

2. Véhicule de ravitaillement selon la revendication 1, **caractérisé en ce que** la cabine de conducteur (3) peut être décalée au moins dans une direction largement de manière transversale par rapport à la direction de déplacement du véhicule de ravitaillement (1) de telle manière que la première partie de plate-forme (10a) de la plate-forme de transfert (10) peut être abaissée et relevée de manière latérale à la cabine de conducteur (3) décalée de cette manière.

3. Véhicule de ravitaillement selon la revendication 1, **caractérisé en ce que** la cabine de conducteur (3) est disposée de manière non décalable dans le véhicule de ravitaillement (1) et que la première partie de plate-forme (10a) pouvant être relevée et abaissée est disposée latéralement à côté de ladite cabine de conducteur (3) immobile, et que la deuxième partie de plate-forme (10b) est disposée au-dessus du toit de la cabine de conducteur (3), d'où la première partie de plate-forme (10a) et la deuxième partie de plate-forme (10b) peuvent être déplacées au moins à une première hauteur de transfert, située au-dessus du toit de la cabine de conducteur, de la plate-forme de transfert (10).

4. Véhicule de ravitaillement selon la revendication 1, **caractérisé en ce que** la première partie de plate-forme (10a) ainsi que la deuxième partie de plate-forme (10b) de la plate-forme de transfert (10) sont guidées respectivement par un dispositif de guidage (7 ; 7').

5. Véhicule de ravitaillement selon la revendication 4, **caractérisé en ce que** le dispositif de guidage (7) possède deux rails de roulement (7a', 7c'), dans lesquels la première partie de plate-forme (10a) de la plate-forme de transfert (10) est guidée de manière à pouvoir coulisser, et que la deuxième partie de plate-forme (10b) est guidée par un des rails de roulement (7c') du premier dispositif de guidage (7) et par un autre rail de roulement (7b') de l'autre dispositif de guidage (7').

6. Véhicule de ravitaillement selon l'une quelconque des revendications précédentes, **caractérisé en ce que** le dispositif de guidage (7) pour la première partie de plate-forme (10a) de la plate-forme de transfert (10) possède un châssis intermédiaire (13) avec des rails de roulement (13a, 13b).

7. Véhicule de ravitaillement selon l'une quelconque des revendications précédentes, **caractérisé en ce que** les rails de roulement (7a, 7c) pour la première partie de plate-forme (10a) sont disposés dans un fourgon (4) du véhicule de ravitaillement (1).

8. Véhicule de ravitaillement selon l'une quelconque des revendications précédentes, **caractérisé en ce que** l'autre élément de guidage (7b) pour la deuxième partie de plate-forme (10b) est disposé dans le fourgon (4).

9. Véhicule de ravitaillement selon l'une quelconque des revendications précédentes, **caractérisé en ce que** le véhicule de ravitaillement (1) présente un dispositif de levage (6), qui permet de déplacer le fourgon (4) sur la première hauteur de transfert et/ou sur la deuxième hauteur de transfert.

10. Véhicule de ravitaillement selon l'une quelconque des revendications précédentes, **caractérisé en ce que** la plate-forme de transfert (10) présente un dispositif de protection antichute.

11. Véhicule de ravitaillement selon la revendication 10, **caractérisé en ce que** le dispositif de protection antichute présente au moins une barrière disposée au niveau d'un côté longitudinal de la plate-forme de transfert (10).

12. Véhicule de ravitaillement selon l'une quelconque des revendications précédentes, **caractérisé en ce que** la plate-forme de transfert (10) présente deux balustrades extérieures (11a, 11b) ainsi qu'une balustrade centrale (11c), qui est disposée au niveau de la première partie de plate-forme (10a).

13. Véhicule de ravitaillement selon l'une quelconque des revendications précédentes, **caractérisé en ce que** la balustrade centrale (11c) présente au moins deux parties de balustrade (11c', 11c"), dans lequel la partie avant de balustrade (11c) est mobile par rapport à la partie arrière de balustrade (11b).

14. Utilisation d'un véhicule de ravitaillement servant à charger et/ou à décharger un aéronef, **caractérisé en ce qu'**un véhicule de ravitaillement (1) selon l'une quelconque des revendications 1-13 est utilisé en tant que véhicule de ravitaillement.

15. Procédé servant à charger et/ou à décharger un aéronef, **caractérisé en ce qu'**un véhicule de ravitaillement selon l'une quelconque des revendications 1-13 est utilisé.
